# EUROPÄISCHE PATENTANMELDUNG

(11) **EP 4 349 298 A1**
(43) Veröffentlichungstag der Anmeldung: **10.04.2024**
(21) Anmeldenummer: 22199510.3
(22) Anmeldetag: 04.10.2022
(51) Int. Cl.: A61C 7/10

(54) **ORTHODONTISCHE DEHNSCHRAUBE UND WERKZEUG**

(71) Anmelder: Hostettler Dental AG, 4950 Huttwil (CH)
(72) Erfinder: HOSTETTLER, Jonas, 4950 Huttwil (CH)
(74) Vertreter: Kieffer, Valentin

(57) **Zusammenfassung**

Die Erfindung betrifft eine orthodontische Dehnschraube umfassend zwei Gehäuseteile (11, 12), eine Gewindespindel (2) und mindestens einen Führungsstift (3), wobei die Gewindespindel (2) zwei gegenläufige Gewinde (21, 22) aufweist und jedes Gewinde (21, 22) in eine entsprechende Gewindeöffnung (111, 121) eines Gehäuseteils (11, 12) eingreift. Die Gewindespindel (2) ist zwischen den Gewinden (21, 22) mit einem Spindelkopf (23) versehen. Der Führungsstift (3) ist parallel zur Gewindespindel (2) angeordnet und in einer entsprechenden Führungsöffnung (112, 122) jedes Gehäuseteils (11, 12) verschiebbar gelagert ist. Der Spindelkopf (23) weist eine im Wesentlichen zylindrische Geometrie auf und der Umfang des Spindelkopfes (23) weist Wellenberge (231) auf, die parallel zur Längsmittelachse (A) der Gewindespindel (2) verlaufen und jeweils durch Täler (232) beabstandet sind. Eine Oberfläche des Führungsstifts (3) greift in einem Tal (232) zwischen zwei benachbarten Wellenbergen (231) des Spindelkopfes (23) ein.

## Beschreibung

Die vorliegende Erfindung betrifft eine orthodontische Dehnschraube gemäss Patentanspruch 1 und ein Set umfassend eine orthodontische Dehnschraube und ein Werkzeug gemäss Anspruch 9.

Zur Korrektur einer Fehlstellung von Zähnen werden im Mund des Patienten orthodontische Apparate eingesetzt, die auf fehlstehende Zähne eine Kraft ausüben und diese dadurch langsam in die richtige Position bringen. Orthodontische Apparate bestehen häufig aus mehreren Teilen, die beweglich miteinander verbunden sind. Durch eine Relativbewegung dieser Teile aufeinander zu oder voneinander weg wird auf die Zähne die für die orthodontische Behandlung gewünschte Druck- oder Zugkraft ausgeübt. Um Teile eines orthodontischen Apparats relativ zueinander zu bewegen, ist es im Stand der Technik bekannt, diese Teile mittels Dehnschrauben miteinander zu verbinden. Dehnschrauben bestehen üblicherweise aus zwei Gehäuseteilen und aus einer Gewindespindel, welche an beiden Enden gegenläufige Gewinde aufweist und in entsprechende Gewindebohrungen der beiden Gehäuseteile eingreift, so dass sich durch Drehen der Gewindespindel die beiden Gehäuseteile relativ zueinander verstellen lassen. Diese Dehnschrauben sind jeweils auch mit einem oder zwei Führungsstiften versehen, die in entsprechende Führungsbohrungen der beiden Gehäuseteile eingreifen. Die Führungsstifte verhindern, dass sich beim Drehen der Gewindespindel die beiden Gehäuseteile gegeneinander verdrehen. Eine derartige Dehnschraube ist beispielsweise aus der DE 19515663 A1 bekannt.

Damit die Dehnschraube sich nicht löst bzw. sich aufgrund der wirkenden Kraft nicht dreht, muss die Gewindespindel gegen Drehung gesichert werden. Die Führungsstifte müssen die Bewegung der beiden Gehäuseteile relativ zueinander zulassen aber diese gleichzeitig zusammenhalten, um die Stabilität der Dehnschraube zu gewährleisten. Nachteilig an den bekannten Dehnschrauben ist, dass deren Aufbau entweder sehr einfach ist, was sich negativ auf die Stabilität der Dehnschraube auswirkt, oder sie haben einen zu komplexen Aufbau.

Die vorliegende Erfindung stellt sich nunmehr die Aufgabe, eine orthodontische Dehnschraube mit einfachem Aufbau bereitzustellen, bei welcher die Gewindespindel gegen Drehung gesichert ist und die Führungsstifte die Gehäuseteile stabil zusammenhalten und gleichzeitig deren Bewegung relativ zueinander ermöglichen. Eine weitere Aufgabe der Erfindung ist, eine orthodontische Dehnschraube mit vereinfachter Bedienung bereitzustellen.

Diese Aufgabe löst eine orthodontische Dehnschraube mit den Merkmalen des Patentanspruches 1. Weitere Merkmale und Ausführungsbeispiele gehen aus den abhängigen Ansprüchen hervor und deren Vorteile sind in der nachfolgenden Beschreibung erläutert.

Die Zeichnungen zeigen:
- Figur 1a: Perspektivansicht der Dehnschraube
- Figur 1b: Draufsicht im Schnitt der Dehnschraube
- Figuren 2a-b: Ausführungsvarianten der Dehnschraube, Seitenansicht im Schnitt
- Figur 3a: Perspektivansicht einer Ausführungsvariante der Dehnschraube
- Figur 3b: Ausführungsvariante der Dehnschraube, Seitenansicht im Schnitt
- Figuren 4a-b: Werkzeug zum Drehen des Spindelkopfes

Die Figuren stellen mögliche Ausführungsbeispiele dar, welche in der nachfolgenden Beschreibung erläutert werden.

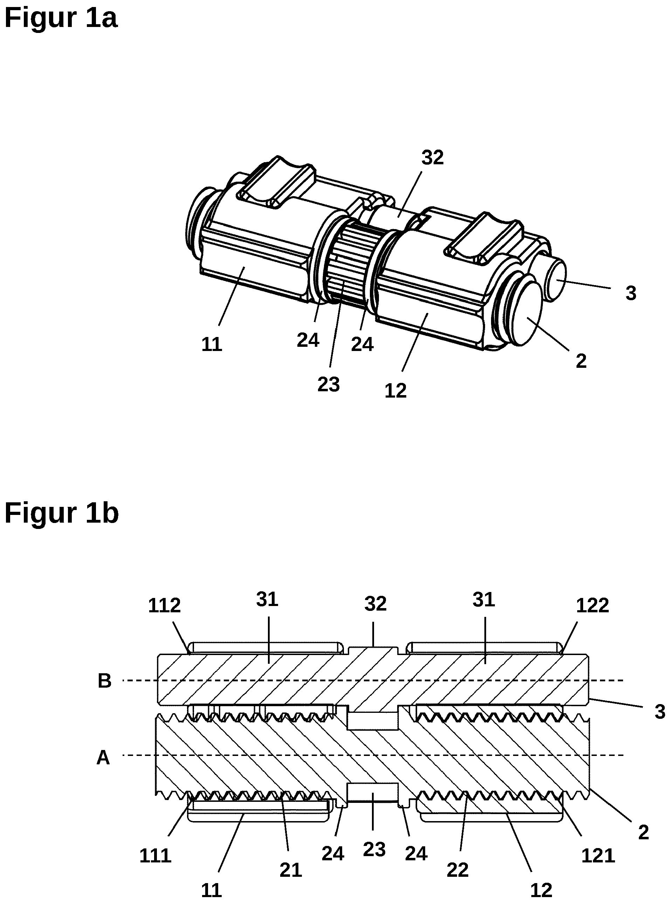

Die erfindungsgemässe orthodontische Dehnschraube umfasst zwei Gehäuseteile 11, 12, eine Gewindespindel 2 und mindestens einen ersten Führungsstift 3 (Figuren 1a-b). Die Gewindespindel 2 weist zwei gegenläufige Gewinde 21, 22 auf, wobei jedes Gewinde 21, 22 in eine entsprechende Gewindeöffnung 111, 121 eines Gehäuseteils 11, 12 eingreift. So lassen sich die Gehäuseteile 11, 12 durch Drehen der Gewindespindel relativ zueinander verstellen: In der einen Drehrichtung werden die Gehäuseteile aufeinander zu und in der anderen Drehrichtung werden die Gehäuseteile voneinander weg bewegt. Zwischen den Gewinden 21, 22 ist die Gewindespindel 2 mit einem Spindelkopf 23 versehen, so dass die Gehäuseteile 11, 12 beiderseits des Spindelkopfes 23 angeordnet sind. Von Vorteil ist es, wenn der Spindelkopf 23 sich in der Mitte der Gewindespindel 2 befindet und an die Gewinde 21, 22 unmittelbar angrenzt. Der erste Führungsstift 3 ist parallel zur Gewindespindel 2 angeordnet und ist in einer entsprechenden Führungsöffnung 112, 122 jedes Gehäuseteils 11, 12 bewegbar gelagert. Dadurch wird verhindert, dass sich beim Drehen der Gewindespindel 2 die beiden Gehäuseteile 11, 12 gegeneinander verdrehen. Beim Drehen der Gewindespindel 2 gleiten die Gehäuseteile 11, 12 in entgegengesetzte Richtungen am ersten Führungsstift 3 entlang.

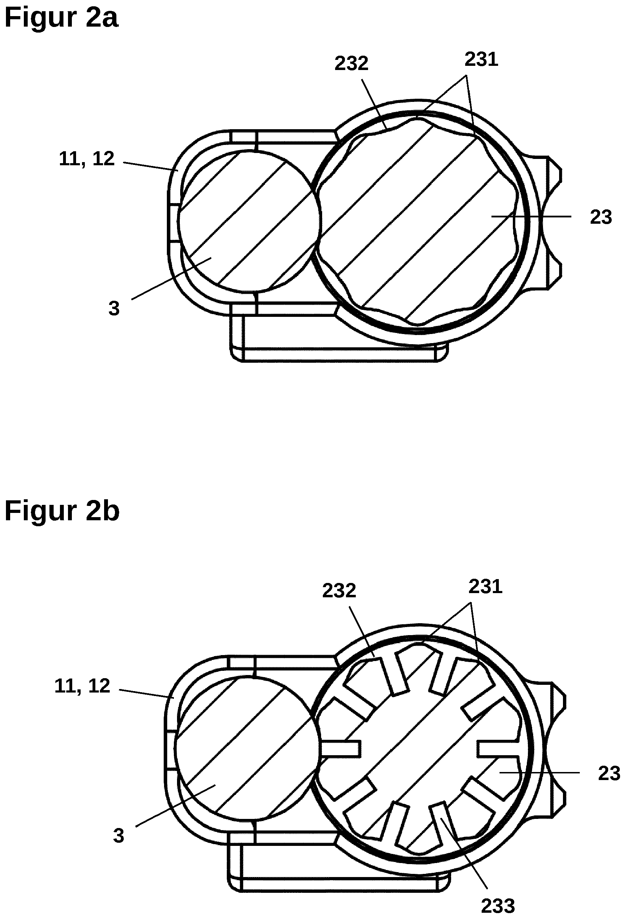

Erfindungsgemäss ist vorgesehen, dass der Spindelkopf 23 eine im Wesentlichen zylindrische Geometrie aufweist, wobei die Längsmittelachse A des zylindrischen Spindelkopfes 23 mit der Längsmittelachse A der Gewindespindel 2 zusammenfällt. Der Umfang des Spindelkopfes 23 ist gewellt, mit Wellenbergen 231, die parallel zur Längsmittelachse A der Gewindespindel 2 verlaufen und jeweils durch Täler 232 beabstandet sind, wobei das radial äusserste Ende der Wellenberge 231 weiter von der Längsmittelachse A der Gewindespindel 2 entfernt ist als das radial tiefste Ende der Täler 232 (Figur 2a). Vorzugsweise sind die Wellenberge 231 und Täler 232 alle identisch und auf dem Umfang des Spindelkopfes 23 regelmässig beabstandet. Zur Sicherung der Gewindespindel 2 gegen unerwünschte Drehungen ist erfindungsgemäss vorgesehen, dass die Gewindespindel 2 und der erste Führungsstift 3 derart nah aneinander liegen, dass eine Oberfläche des ersten Führungsstifts 3 zwischen zwei benachbarten Wellenbergen 231 ins dazwischenliegende Tal 232 des Spindelkopfes 23 eingreift. Der Abstand zwischen der Längsmittelachse A der Gewindespindel 2 und der Oberfläche des ersten Führungsstifts 3 ist somit kleiner als die radiale Dicke des Spindelkopfes 23 zwischen der Längsmittelachse A der Gewindespindel 2 und dem äussersten Ende der Wellenberge 231. Die Gehäuseteile 11, 12 sorgen dafür, dass der Abstand zwischen den Längsmittelachsen A, B der Gewindespindel 2 und des ersten Führungsstifts 3 gleich bleibt und diese sich nicht spreizen. Für eine optimale Stabilität, ist es sogar von Vorteil, wenn die Gehäuseteile die Gewindestange 2 und den ersten Führungsstift 3 nicht nur zusammen halten sondern noch unter Druckspannung setzen. Da die unbewegliche Oberfläche des ersten Führungsstifts 3 zwischen zwei benachbarten Wellenbergen 231 ins dazwischenliegende Tal 232 des Spindelkopfes 23 eingreift, wird die Gewindestange 2 gegen Drehung gesichert. Eine Drehung der Gewindespindel 2 ist nur mit Ausübung einer derart grossen Drehkraft auf den Spindelkopf 23 möglich, wobei die Gewindestange 2 und/oder der erste Führungsstift 3 und/oder die Gehäuseteile 11, 12 sich elastisch leicht verformen und der erste Führungsstift 3 über einen der Wellenberge 231 bis ins nächste Tal 232 gelangt. Vorzugsweise haben die Wellenberge 231 eine geschwungene Form, mit einem abgerundeten äussersten Ende, was den Übergang des ersten Führungsstifts 3 über den Wellenberg und damit die Drehung des Spindelkopfes 23 vereinfacht. Vorzugsweise entspricht die Krümmung der Seiten der Wellenberge 231 und der Täler 232 der Krümmung der Oberfläche des ersten Führungsstifts 3, damit die Oberfläche des ersten Führungsstifts 3 und des Spindelkopfes 23 formschlüssig ineinandergreifen. Dies maximiert die Kontaktfläche zwischen dem ersten Führungsstift 3 und dem Spindelkopf 2, damit die sich dazwischen ausbildende Druckkraft einheitlich verteilt wird und der erste Führungsstift 3 und der Spindelkopf 2 sich darunter nicht verformen aufgrund der vorhandenen Druckspannung.

Besonders vorteilhaft ist es, wenn der erste Führungsstift 3 zwei Gleitbereiche 31 aufweist, auf welchen die Führungsöffnung 112, 122 jedes Gehäuseteils gleiten kann, und dazwischen eine Verdickung 32 mit einem Durchmesser der grösser ist als der Durchmesser der Gleitbereiche 31. Der Umfang dieser Verdickung 32 bildet die Oberfläche des ersten Führungsstifts 3, die den Spindelkopf 23 kontaktiert und in seine Täler 232 eingreift. Die Ausbildung einer Verdickung 32 als erhöhte Kontaktfläche zwischen dem ersten Führungsstift 3 und der Gewindespindel 2 weist drei Vorteile auf. Erstens dient die Verdickung 32 als Abstandhalter zwischen dem ersten Führungsstift 3 und der Gewindespindel 2, damit nur die Verdickung 32 und der Spindelkopf 23 in Kontakt kommen. Um die Drehung der Gewindespindel nicht zu beeinträchtigen, dürfen die Gewinde 21, 22 den ersten Führungsstift 3 nicht kontaktieren. Zweitens wird mit der Verdickung 32 die Oberfläche des ersten Führungsstifts 3, die den Spindelkopf 23 kontaktiert, vergrössert, was den Reibungswiderstand gegen Drehung ebenfalls vergrössert. Drittens wird der Durchmesser der Verdickung 32 derart gewählt, dass die Verdickung 32 nicht durch die Führungsöffnungen 111, 121 der Gehäuseteile 11, 12 passt. Dadurch wird die Verdickung 32 zwischen den Gehäuseteilen 11, 12 gehalten und sichergestellt, dass der erste Führungsstift 3 immer richtig positioniert ist. Ansonsten könnte der erste Führungsstift 3 in die Führungsöffnungen 111, 121 der Gehäuseteile 11, 12 frei gleiten und im Extremfall sogar herausfallen. Im Stand der Technik wird dies gelöst, indem ein zusätzlicher Führungsstift vorgesehen ist. Von Vorteil ist es des Weiteren, wenn der erste Führungsstift 3 nicht nur relativ zu den Gehäuseteilen 11, 12 gegen Verschiebung gesichert ist, sondern auch relativ zur Gewindespindel 2. Dafür kann die Gewindespindel 2 zwei radial herausragende Flansche 24 aufweisen, die in einem Abstand angeordnet sind, der der Länge (gemessen entlang der Längsmittelachse B des ersten Führungsstifts 3) der Verdickung 32 entspricht, und die Verdickung 32 flankieren. Die Verdickung befindet sich somit zwischen den Flanschen 24 und ist dadurch auch relativ zur Gewindespindel 2 gegen Verschiebung gesichert.

Von Vorteil ist es, wenn der Spindelkopf 23 mit einer oder mehreren Vertiefungen 233 versehen ist, in welche ein entsprechendes Werkzeug eingreifen kann und der Spindelkopf 23 durch Betätigung des Werkzeugs gedreht werden kann (Figur 2b). Dehnschrauben sind zum Einsatz im Mund eines Patienten bestimmt und müssen für die Behaglichkeit des Patienten möglichst klein sein. So haben Spindelköpfe 23 einen Durchmesser von typischerweise etwa 3 mm und die darin geformten Vertiefungen 233 sind nur etwa 0.25 mm breit. Dies macht das Einführen eines Werkzeugs in die Vertiefungen 233 mühsam. Besonders vorteilhaft ist es also, wenn die Vertiefungen 233 am innersten Ende der Täler 232 angeordnet werden, so dass die Seiten der Wellenberge 231 und die Täler 232 als Führung für das Werkzeug dienen und eine Art Trichter bilden, die zur Vertiefung 233 führt. Vor Vorteil für die Einführung des Werkzeuges ist es ausserdem, wenn die äusseren Kanten der Vertiefungen abgerundet sind. Versuche haben gezeigt, dass diese Geometrie das Einführen eines Werkzeugs in einer Vertiefung wesentlich vereinfacht, zumal der Kieferorthopäde mit der Spitze des Werkzeuges nicht genau die sehr schmale Vertiefung 233 treffen muss, sondern lediglich den grösseren Bereich zwischen zwei Wellenbergen 231. Vorzugsweise wird der Spindelkopf 23 mit Vertiefungen in jedem Tal 232 zwischen allen Wellenbergen 231 versehen, so dass der Kieferorthopäde mit dem Werkzeug einfach irgendwo auf den Spindelkopf 23 zielen kann, und dieses durch die Wellenberge 231 und Täler 232 spontan in eine Vertiefung 233 geführt wird. Die Vertiefungen 233 können jede beliebige Tiefe aufweisen und sogar durchgehend sein. Die Vertiefungen 233 können punktuelle Bohrungen sein oder Furchen darstellen, die beispielsweise die gleiche Länge (gemessen entlang der Längsmittelachse A der Gewindespindel 2) wie die Wellenberge 231 haben.

In einer möglichen Ausführungsvariante der Dehnschraube ist die Oberfläche des ersten Führungsstifts 3, die den Spindelkopf 23 kontaktiert, beispielsweise die Verdickung 32, nicht zylindrisch, sondern weist Erhöhungen auf, die zwischen den Wellenbergen 231 in die Täler 232 des Spindelkopfes 23 eingreifen und/oder weist Vertiefungen auf, in welche die Wellenberge 231 des Spindelkopfes 23 eingreifen. Beispielsweise kann die Oberfläche des ersten Führungsstifts 3, insbesondere die Verdickung 32, Längskerben aufweisen. Das Ineinandergreifen der Wellenberge 231 und der Längskerben trägt zur besseren Sicherung des Spindelkopfes 23 gegen Drehung. Dieser Effekt wird noch zusätzlich verstärkt, wenn der erste Führungsstift 3 Erhöhungen aufweist, die teilweise in die Vertiefungen 233 eingreifen.

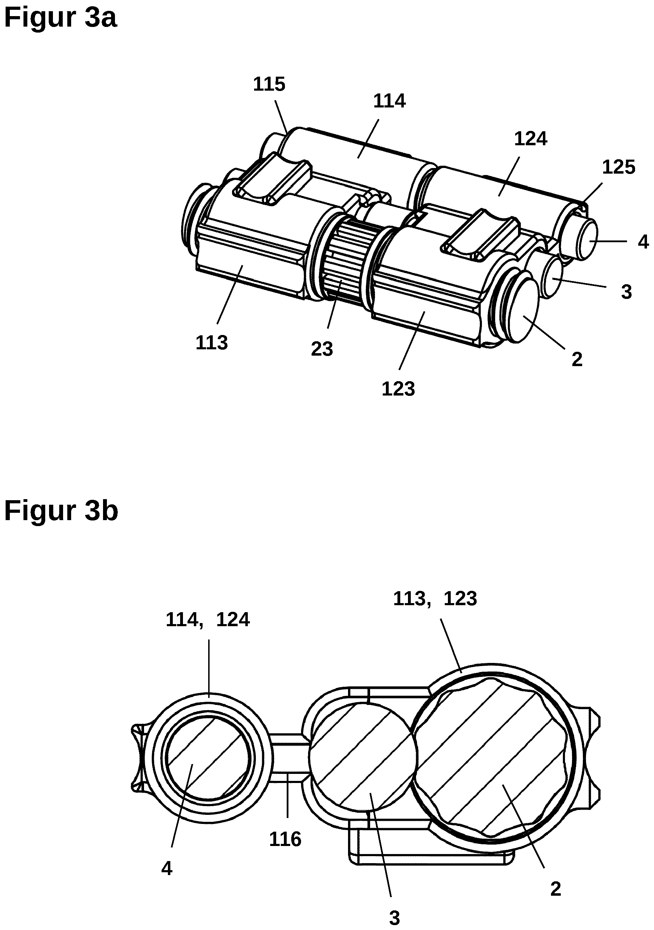

Je nach Einsatz der Dehnschraube und Anforderungen an deren Stabilität kann ein einziger Führungsstift 3 genügen oder die Dehnschraube muss für eine bessere Stabilität mit zwei Führungsstiften 3 versehen sein. Der Kieferorthopäde oder Zahntechniker muss in seinem Sortiment also zwei Modelle von Dehnschrauben haben, ein Modell mit einem einzigen Führungsstift 3 und ein Modell mit zwei Führungsstiften 3. Alternativ können immer Dehnschrauben mit zwei Führungsstiften 3 eingesetzt werden, was sich allerdings negativ auf die Bequemlichkeit der orthodontischen Apparatur auswirkt, weil diese unnötig gross ist. Von Vorteil ist es also, wenn die erfindungsgemässe Dehnschraube zusätzlich zum bereits erwähnten ersten Führungsstift 3 noch einen entfernbaren zweiten Führungsstift 4 aufweist. In diesem Fall umfasst jedes Gehäuseteil 11, 12 zwei Gehäuseabschnitte 113, 114 respektive 123, 124: einen ersten Gehäuseabschnitt 113, 123 mit der Gewindeöffnung 111, 121 und mit einer ersten Führungsöffnung 112, 122 für den ersten Führungsstift 3 und einen trennbaren Gehäuseabschnitt 114, 124 mit einer entfernbaren Führungsöffnung 115, 125 in welcher der entfernbare Führungsstift 4 verschiebbar gelagert ist (Figur 3a). Der erste Gehäuseabschnitt 113, 123 und der trennbare Gehäuseabschnitt 114, 124 sind über eine Sollbruchstelle miteinander verbunden und können durch eine Fachkraft (z.B. einen Zahntechniker) voneinander getrennt werden. Die Sollbruchstelle wird beispielsweise durch eine Furche, durch eine niedrige Dicke oder durch Perforationen im Gehäuseteil 11, 12 gebildet, die den Abbruch des Gehäuseteils 11, 12 an dieser definierten Stelle begünstigen. Die Sollbruchstelle kann sich beispielsweise auf oder am Rand eines Verbindungsstegs 116 befinden, der den ersten Gehäuseabschnitt 113, 123 und den trennbaren Gehäuseabschnitt 114, 124 verbindet. Während der Herstellung der kieferorthopädischen Apparatur kann nach Einsatzgebiet im Mund des Patienten die Dehnschraube von der Fachkraft (z.B. der Zahntechniker) jedes Gehäuseteil 11, 12 an der Sollbruchstelle trennen und den trennbaren Gehäuseabschnitt 113, 123 recyclen. Von Vorteil ist es, wenn die Längsmittelachsen der Gewindespindel 2, des ersten Führungsstifts 3 und des entfernbaren Führungsstifts 4 in der gleichen Ebene liegen. Die Dehnschraube kann somit möglichst flach ausgestaltet sein, damit diese im Mund des Patienten so wenig wie möglich hervorsteht und den Patienten am wenigsten stört. Von Vorteil ist es ausserdem, wenn die Gewindespindel 2 nicht zwischen den Führungsstiften 3, 4 angeordnet ist, sondern beide Führungsstifte 3, 4 auf derselben Seite der Gewindespindel 2 angeordnet sind. Diese Anordnung erlaubt dem Kieferorthopäden einen besseren Zugang zum Spindelkopf 23 und vergrössert den Winkel, um welchen der Spindelkopf 23 mit dem Werkzeug auf einmal gedreht werden kann. Durch die Wahl einer hohen Gewindesteigung der Gewinde 21, 22 kann der Winkel, um welchen der Spindelkopf 23 zu drehen ist, damit die Gehäuseteile 11, 12 eine bestimmte Bewegung ausführen, ausserdem verkleinert werden. In der bevorzugten Ausführungsvariante der Dehnschraube wird die Gewindesteigung derart gewählt, dass schon eine Drehung des Spindelkopfes 23 um ca. 10° genügt, um die Gehäuseteile 11, 12 um ca. 0.2 mm voneinander weg oder aufeinander zu zu bewegen, während bei den herkömmlichen Dehnschrauben dafür Drehungen von bis zu 90° benötigt werden.

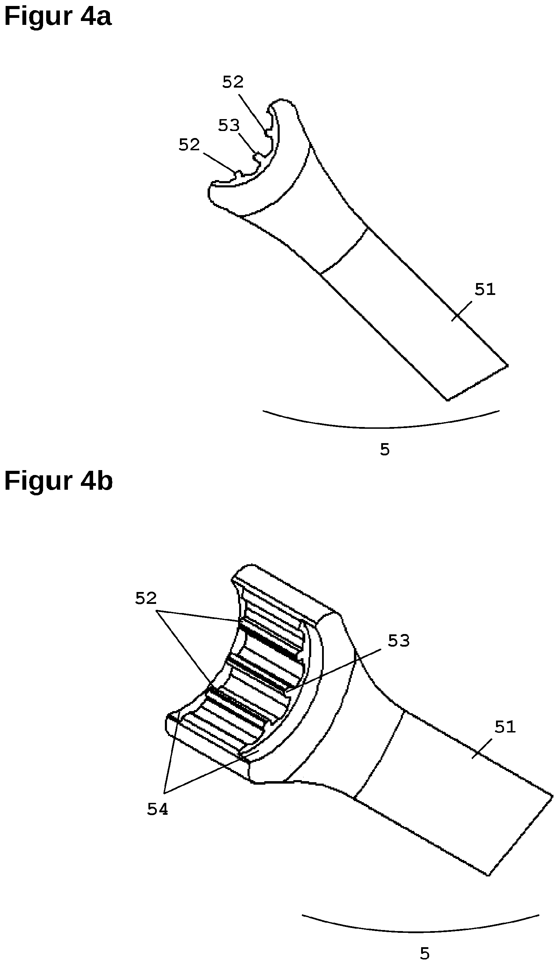

Besonders vorteilhaft ist es, wenn für die Drehung des Spindelkopfes 23 ein Werkzeug 5 bereitgestellt wird, welches einen Griff 51 und mindestens zwei Zähnen 52, 53 die zum gleichzeitigen Eingriff in zwei Vertiefungen 233 geeignet sind (Figuren 4a-b). Das Vorhandensein von zwei Zähnen gewährleistet eine bessere Kraftübertragung und Stabilität beim Drehen des Spindelkopfes 23. Je nach Ausführungsvariante des Werkzeugs 5 können die Zähne 52, 53 so ausgebildet sein, dass die zum Eingriff in zwei benachbarten oder nicht-benachbarten Vertiefungen 233 geeignet sind. Besonders vorteilhaft ist es, wenn das Werkzeug 5 mit drei Zähnen 52, 53 versehen ist, die zum Eingriff in drei benachbarten Vertiefungen 233 geeignet sind, wobei zur besseren Einführung der Zähne 52, 53 in die Vertiefungen 233 die zwei äusseren Zähne 52 kürzer sind als der mittlere Zahn 53.

In einer Ausführungsvariante des Werkzeugs 5 haben die Zähne 52, 53 im Wesentlichen die gleiche Länge wie die Vertiefungen 233 des Spindelkopfes 23, in welche sie eingreifen sollen. Beim der Kopplung des Werkzeugs 5 mit dem Spindelkopf 23 sorgen die Flanschen 24 des Spindelkopfes 23 für die genaue Zentrierung des Werkzeugs 5 am Spindelkopf 23 und verhindern jedes Ausrutschen der Zähne 52, 53 und des Werkzeugs 5 aus den Vertiefungen 233 entlang der Längsachse der Gewindespindel 2. Die Zähne 52, 53 erstrecken sich zwischen zwei flachen Bereichen 54 des Werkzeugs 5, die auf den äusseren Umfang der Flanschen 24 des Spindelkopfes 23 ruhen, wenn das Werkzeug 5 mit dem Spindelkopf 23 gekoppelt wird.

## Patentansprüche

1. Orthodontische Dehnschraube umfassend zwei Gehäuseteile (11, 12), eine Gewindespindel (2) und mindestens einen ersten Führungsstift (3), wobei
die Gewindespindel (2) zwei gegenläufige Gewinde (21, 22) aufweist und jedes Gewinde (21, 22) in eine entsprechende Gewindeöffnung (111, 121) eines Gehäuseteils (11, 12) eingreift,
die Gewindespindel (2) zwischen den Gewinden (21, 22) mit einem Spindelkopf (23) versehen ist und
der erste Führungsstift (3) parallel zur Gewindespindel (2) angeordnet ist und in einer entsprechenden Führungsöffnung (112, 122) jedes Gehäuseteils (11, 12) verschiebbar gelagert ist,
**dadurch gekennzeichnet, dass**
der Spindelkopf (23) eine im Wesentlichen zylindrische Geometrie aufweist und der Umfang des Spindelkopfes (23) Wellenberge (231) aufweist, die parallel zur Längsmittelachse der (A) Gewindespindel (2) verlaufen und jeweils durch Täler (232) beabstandet sind, und dass eine Oberfläche des ersten Führungsstifts (3) in einem Tal (232) zwischen zwei benachbarten Wellenbergen (231) des Spindelkopfes (23) eingreift.

2. Orthodontische Dehnschraube gemäss Anspruch 1,
**dadurch gekennzeichnet, dass**
das äusserste Ende der Wellenberge (231) abgerundet ist und die Krümmung der Seiten der Wellenberge (231) und der Täler (232) der Krümmung der Oberfläche des ersten Führungsstifts (3) entspricht.

3. Orthodontische Dehnschraube gemäss Anspruch 1,
**dadurch gekennzeichnet, dass**
der erste Führungsstift (3) zwei Gleitbereiche (31) aufweist, auf welche die Führungsöffnung (112, 122) jedes Gehäuseteils (11, 12) gleiten kann, und
der erste Führungsstift (3) zwischen den Gleitbereichen (31) eine Verdickung (32) aufweist, mit einem Durchmesser grösser als den Durchmesser der Gleitbereiche (31) und grösser als der innere Durchmesser der Führungsöffnungen (112, 122), wobei der Umfang dieser Verdickung (32) die Oberfläche des ersten Führungsstifts (3) bildet, die den Spindelkopf (23) kontaktiert.

4. Orthodontische Dehnschraube gemäss Anspruch 3,
**dadurch gekennzeichnet, dass**
die Gewindespindel (2) zwei radial herausragende Flansche (24) aufweist, die in einem Abstand angeordnet sind, der der Länge der Verdickung (32) entspricht, und die Verdickung (32) derart flankieren, dass die Verdickung (32) zwischen den Flanschen (24) hineinragt.

5. Orthodontische Dehnschraube gemäss Anspruch 1,
**dadurch gekennzeichnet, dass**
der Spindelkopf (23) mit einer oder mehreren Vertiefungen (233) versehen ist, zum Eingriff mit einem Werkzeug zur Drehung des Spindelkopfes (23).

6. Orthodontische Dehnschraube gemäss Anspruch 5,
**dadurch gekennzeichnet, dass**
die Vertiefungen (233) am innersten Ende der Täler (232) angeordnet sind, so dass die Seiten der Wellenberge (231) und die Täler (232) als Führung für das Werkzeug dienen und eine Art Trichter bilden, die zur Vertiefung (233) führt.

7. Orthodontische Dehnschraube gemäss Anspruch 1,
**dadurch gekennzeichnet, dass**
die Oberfläche des ersten Führungsstifts (3), die den Spindelkopf (23) kontaktiert, Erhöhungen aufweist, die zwischen den Wellenbergen (231) in die Täler (232) des Spindelkopfes (23) eingreifen und/oder Vertiefungen aufweist, in welche die Wellenberge (231) des Spindelkopfes (23) eingreifen.

8. Orthodontische Dehnschraube gemäss Anspruch 1,
**dadurch gekennzeichnet, dass**
jedes Gehäuseteil (11, 12) zwei Gehäuseabschnitte (113, 114, 123, 124) umfasst:
• einen ersten Gehäuseabschnitt (113, 123) mit der Gewindeöffnung (111, 121) und mit einer ersten Führungsöffnung (112, 122) für den ersten Führungsstift (3); und
• einen trennbaren Gehäuseabschnitt (114, 124) mit einer entfernbaren Führungsöffnung (115, 125) in welcher ein entfernbarer Führungsstift (4) verschiebbar gelagert ist,
wobei der erste Gehäuseabschnitt (113, 123) und der trennbare Gehäuseabschnitt (114, 124) über eine Sollbruchstelle miteinander verbunden sind.

9. Set umfassend eine orthodontische Dehnschraube gemäss Anspruch 5 und ein Werkzeug (5) für die Drehung des Spindelkopfes (23),
**dadurch gekennzeichnet, dass**
das Werkzeug (5) einen Griff (51) und mindestens zwei Zähnen (52, 53) umfasst, die zum gleichzeitigen Eingriff in zwei Vertiefungen (233) des Spindelkopfes (23) geeignet sind.

10. Set gemäss Anspruch 9,
**dadurch gekennzeichnet, dass**
das Werkzeug (5) mit drei Zähnen (52, 53) versehen ist, die zum Eingriff in drei benachbarten Vertiefungen (233) geeignet sind, wobei zur besseren Einführung der Zähne (52, 53) in die Vertiefungen (233) die zwei äusseren Zähne (52) kürzer sind als der mittlere Zahn (53).

11. Set gemäss Anspruch 9,
**dadurch gekennzeichnet, dass**
die Flaschen (24) des Spindelkopfes (23) das Werkzeug (5) im gekoppeltem Zustand mit dem Spindelkopf (23) zentrieren und gegen Ausrutschen entlang der Längsachse des Spindelkopfes (23) versichern.
